# EUROPÄISCHE PATENTSCHRIFT

(11) **EP 0 492 094 B1**
(45) Veröffentlichungstag und Bekanntmachung des Hinweises auf die Patenterteilung: **02.11.1994**
(21) Anmeldenummer: 91118777.1
(22) Anmeldetag: 04.11.1991
(51) Int. Cl.: F16K 37/00

(54) **Stellungsanzeigevorrichtung**
Position indication device
Dispositif d'indication de position

(30) Priorität: 20.12.1990 DE 9017208 U
(43) Veröffentlichungstag der Anmeldung: 01.07.1992
(73) Patentinhaber: Gebrüder Müller Apparatebau GmbH & Co. KG, D-74665 Ingelfingen (DE)
(72) Erfinder: Müller, Fritz, W-7118 Ingelfingen 2 (DE)
(74) Vertreter: Leyh, Hans, Dr.-Ing.

(56) Entgegenhaltungen:
- EP-A- 0 013 898
- EP-A- 0 125 380
- EP-A- 0 298 821
- DE-A- 64 617

## Beschreibung

Die Erfindung betrifft eine Vorrichtung zur Stellungsanzeige eines Ventils, insbesondere für kleine Hübe, mit einer Betätigungsspindel, die fest mit einem Ventilelement verbunden ist, wobei die Vorrichtung fest am Gehäuse des Ventils angebracht und die Betätigungsspindel mit einer Anzeigespindel gekoppelt ist, die durch das Gehäuse des Ventils nach außen durchgeführt ist und durch welche die jeweilige Stellung des Ventils anzeigbar ist.

Eine Vorrichtung dieser Art ist in der EP-A-0125380 beschrieben.
Bei dieser bekannten Vorrichtung ist die Anzeigespindel fest mit der Betätigungsspindel verbunden.
Auch die EP-A-0013898 zeigt ein Ventil, bei dem eine Anzeigespindel fest mit einem Ventilelement verbunden ist.

Nachteilig hierbei ist, daß der Hub der Anzeigespindel in jedem Fall gleich dem Hub der Betätigungsspindel bzw. dem Hub des Ventilelementes entspricht, was bei Ventilen mit größeren Öffnungshüben zu entsprechend größeren Hüben der Anzeigespindel führt, was aus räumlichen Gründen unerwünscht ist.

Der Erfindung liegt daher die Aufgabe zugrunde, eine Vorrichtung der eingangs genannten Art so weiterzubilden, daß auch bei größeren Hüben der Betätigungsspindel der Hub der Anzeigespindel klein gehalten werden kann.

Nach der Erfindung wird dies dadurch erreicht, daß die Betätigungsspindel und die Anzeigespindel in Axialrichtung relativ zueinander verschiebbar gekoppelt sind.

Hierbei kann zweckmäßigerweise der vorgegebene maximale Hub der Anzeigespindel durch einen Anschlag begrenzt werden, wobei die Betätigungsspindel relativ zur Anzeigespindel axial verschiebbar ist, wenn der Hub der Betätigungsspindel größer ist als der maximale Hub der Anzeigespindel.
Hierdurch ist es möglich, die Stellungsanzeigevorrichtung auch für Ventile zu verwenden, deren Öffnungshub größer ist als der maximale Hub der Anzeigespindel.

Eine beispielsweise Ausführungsform der Erfindung wird nachfolgend anhand der Zeichnung erläutert, in der
- FIGUR 1: im Schnitt eine Vorrichtung zur Stellungsanzeige darstellt.
- FIGUR 2: zeigt die Anzeigespindel im Längsschnitt.
- FIGUR 3: zeigt eine Draufsicht auf das Kopfstück der Anzeigespindel.
- FIGUR 4: zeigt das Führungsstück im Längsschnitt.
- FIGUR 5: zeigt eine Draufsicht auf das Führungsstück.
- FIGUR 6: zeigt die Betätigungsspindel und
- FIGUR 7: zeigt im Schnitt schematisch einen Teil eines Ventils, in dessen Deckel die Stellungsanzeigevorrichtung nach Figur 1 eingeschraubt ist.

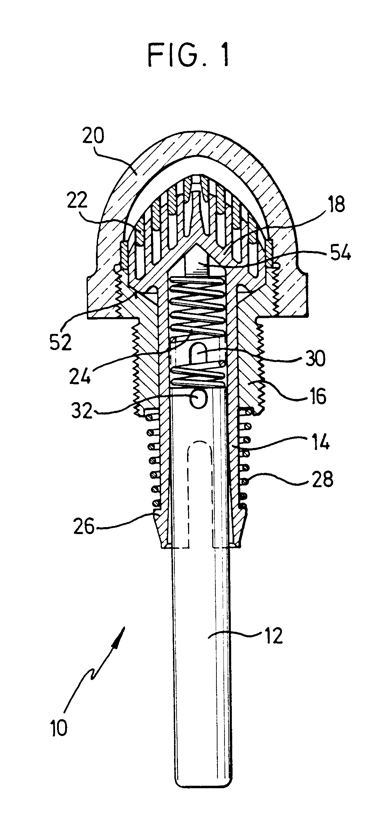

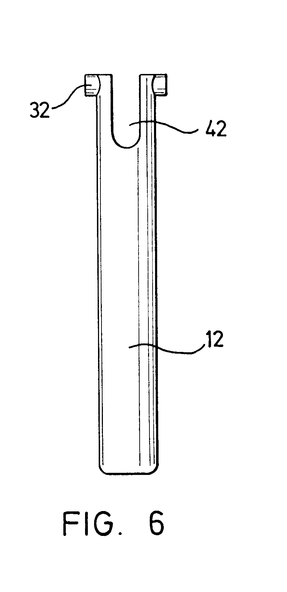

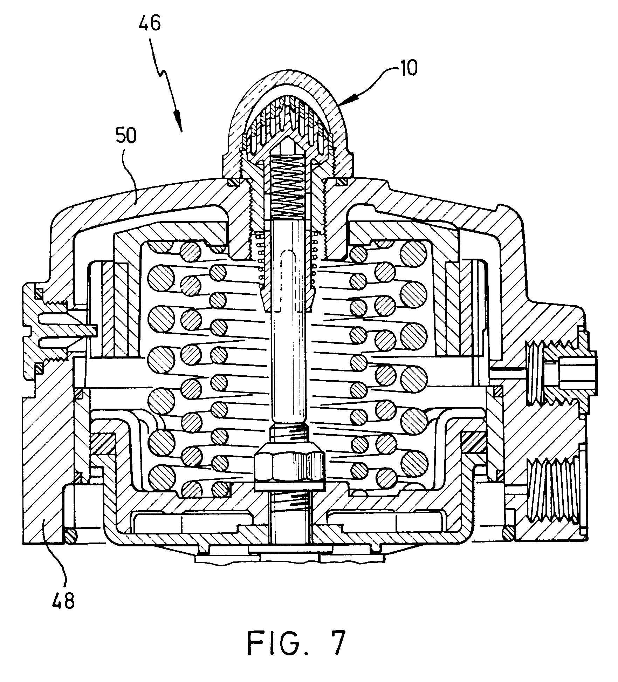

Die Stellungsanzeigevorrichtung 10 nach Figur 1 umfaßt eine Betätigungsspindel 12 die, was in Figur 1 nicht dargestellt ist, an ihrem ventilseitigen Ende fest mit einem Ventilelement verbunden ist, z.B. einem Ventilteller oder einem Ventilkolben, der mit einem entsprechenden Ventilsitz zusammenwirkt.
Die Betätigungsspindel 12 ist in eine rohrförmige Anzeigespindel 14 eingeschoben, die ihrerseits in einer Gewindebüchse 16 geführt ist. Die Gewindebüchse 16 ist, wie Figur 7 zeigt, in das Gehäuse bzw. den Deckel 50 eines Ventils 46 fest eingeschraubt.
Die Anzeigespindel 14 ist an ihrem entgegengesetzt zur Betätigungsspindel liegendem Ende mit einem Kopfstück 18 versehen, das, wie noch erläutert wird, zur Anzeige des Hubes der Betätigungsspindel 12 dient.
Auf die Gewindebüchse 16 ist ein Deckel oder eine Haube 20 aus einem durchsichtigen Material fest aufgeschraubt.
Zwischen der Gewindebüchse 16 und der Haube 20 ist ein Führungsstück 22 fest eingespannt, das mit dem Kopfstück 18 zur Anzeige des Hubs der Betätigungsspindel 12 zusammenwirkt, wie noch erläutert wird.
In der in Figur 1 dargestellten Ausgangsposition, in der das Ventil geschlossen ist, liegt das Kopfstück an einer Schulter 52 der Gewindebüchse 16 an. Der maximale Hub der Anzeigespindel 14 ist durch Anschlag des Kopfstückes 18 am Führungsstück 22 begrenzt. Dieser maximale Hub kann z.B. 5 mm betragen.
Das Kopfstück 18 ist an seiner Unterseite mit einem kurzen Steg 54 versehen, der etwas in die Bohrung der Anzeigespindel 14 hineinreicht.
In der Bohrung der Anzeigespindel 14 ist eine Druckfeder 24 angeordnet, deren in der Zeichnung unteres Ende sich auf der Stirnfläche der Betätigungsspindel 12 abstützt und deren in der Zeichnung oberes Ende an der Stirnfläche des Steges 54 des Kopfstückes 18 anliegt.
Die Anzeigespindel 14 ist nahe bei ihrem unteren Ende mit einer ringförmigen Schulter 26 ausgestattet und zwischen dieser Schulter 26 und der in der Zeichnung unteren Stirnfläche der Gewindebüchse 16 ist eine Druckfeder 28 eingebaut, die in der Zeichnung als Kegelfeder dargestellt ist, aber auch in Form einer zylindrischen Schraubenfeder ausgebildet sein kann. Die Druckfeder 28 ist eine Rückholfeder für die Anzeigespindel 14, wie noch erläutert wird.
In der Wand der rohrförmigen Anzeigespindel 14 sind sich diametral gegenüberliegend zwei in Axialrichtung verlaufende Langlöcher 30 ausgebildet und in jedes dieser Langlöcher 30 ist ein Noppen 32 der Betätigungsspindel 12 eingerastet. Die beiden Noppen 32 sind, wie Figur 6 zeigt, einteilig mit der Anzeigespindel 12 ausgebildet und die Letztere ist, wie ebenfalls Figur 6 zeigt, mit einem von ihrer oberen Stirnfläche ausgehenden axialen Schlitz 42 versehen, um den Noppen 32 eine ausreichende Elastizität zu geben, so daß sie in die hohle Anzeigespindel 14 eingeführt werden und dann in die Langlöcher 30 einrasten können.

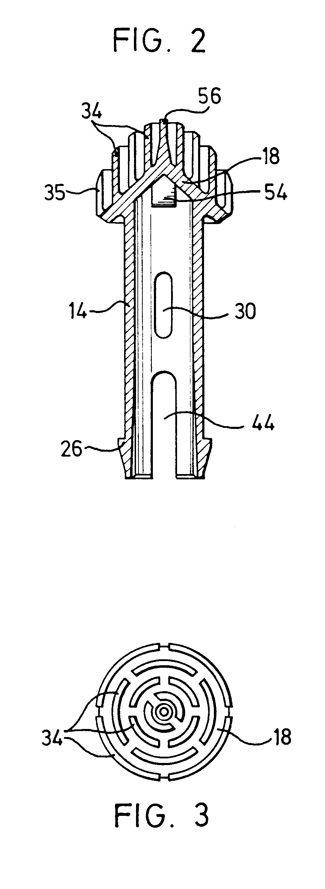

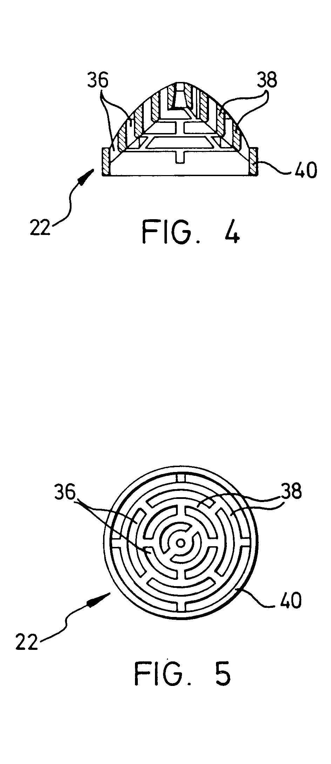

Wie Figur 1, insbesondere aber Figur 2 zeigt, ist das Kopfstück 18 der Anzeigespindel 14 mit sich in Axialrichtung erstreckenden Rippen 34 ausgestattet, die, wie Figur 3 zeigt, eine kreissegmentförmige Gestalt haben. Die Rippen 34 liegen auf mehreren (z.B. vier) konzentrischen Kreisen um die Mittelachse der Anzeigespindel 14, wobei der radiale Abstand zwischen den Rippen zweckmäßigerweise gleicht gewählt ist aber auch unterschiedlich sein kann. Die mittlere Rippe, die auf der Mittelachse der Anzeigespindel 14 liegt, ist hierbei in Form eines Stiftes 56 ausgebildet.
Im Schnitt, wie in den Figuren 1 und 2 dargestellt, hat das Kopfstück 18 eine gewölbte bogenförmige Gestalt in der Art einer Haube oder eines abgerundeten Kegels oder auch in der Form einer Halbkugel, in der Weise, daß die Rippen 34 sich von außen nach innen zunehmend weiter in Axialrichtung erstrecken, so daß die Umhüllende der Rippen 34 z.B.die Form eines Kegels oder eines abgerundeten Kegels hat, wie Figur 2 zeigt.
Mit anderen Worten, der zentrale Stift 56 erstreckt sich am weitesten nach oben (bezogen auf Figur 2), die radial äußersten Rippen 35 erstrecken sich am wenigsten weit nach oben und die anderen Rippen 34 liegen dazwischen.
Die Anzeigespindel 14 ist mit einem von ihrer unteren Stirnseite ausgehenden axialen Schlitz 44 versehen, und sie kann sich zu ihrem unteren Ende hin etwas erweitern zur Vereinfachung der Montage auf der Betätigungsspindel 12.
Das in den Figuren 4 und 5 dargestellte Führungsstück 22 entspricht in seiner äußeren Gestalt im wesentlichen der Gestalt des Kopfstückes 18.
Das Führungsstück 22 ist mit einem ringförmigen Flansch 40 versehen der, wie Figur 1 zeigt, zwischen der Gewindebüchse 16 und der Haube 20 fest eingespannt ist.
Das Führungsstück 22 ist, wie insbesondere Figur 5 zeigt, mit kreissegmentförmigen Schlitzen 36 versehen, die durch kreisringförmige Stege 38 getrennt sind. Die Schlitze 36 liegen auf konzentrischen Kreisen um die Symmetrieachse des Führungsstückes 22 und ihre Anzahl, ihre Größe, ihre Gestalt und ihre radialen Abstände entsprechen den Rippen 34, 35 des Kopfstückes 18, die, wie Figur 1 zeigt, in die Schlitze 36 des Führungsstückes 22 hineinragen. Im Zentrum ist das Führungsstück mit einer axialen Bohrung 58 versehen, in welche der zentrale Stift 56 des Kopfstückes 18 hineinragt, wie ebenfalls in Figur 1 dargestellt ist.
Die äußere Gestalt des Führungsstückes 22 entspricht, wie bereits erwähnt, im wesentlichen derjenigen des Kopfstückes 18, das heißt, die Stege 38 und damit die Schlitze 36 erstrecken sich von außen nach innen zunehmend weiter axial nach oben, wie Figur 4 zeigt. Das Führungsstück 22 hat damit ebenso wie das Kopfstück 18 die Form einer Haube oder eines abgerundeten Kegels.
Figur 7 zeigt schematisch im Schnitt einen Teil eines Ventils 46 mit einem Ventilgehäuse 48, auf das ein Deckel 50 aufgesetzt ist.
In den Deckel 50 ist die in Figur 1 dargestellte Stellungsanzeigevorrichtung fest eingeschraubt und die Betätigungsspindel ist an ihrem unteren Ende (was im einzelnen nicht dargestellt ist) fest mit einem Ventilelement, z.B. einem Ventilteller, verbunden.

Die Stellungsanzeigevorrichtung nach Figur 1 arbeitet folgendermaßen.
Wenn das in Figur 7 gezeigte Ventil öffnet, bewegt sich die Betätigungsspindel 12 zusammen mit dem Ventilelement aufwärts (bezogen auf Figur 1) und diese Bewegung der Betätigungsspindel 12 wird über die Druckfeder 24 und den Steg 54 auf die Anzeigespindel 14 übertragen. Bei dieser Aufwärtsbewegung wird die Druckfeder 28 zusammengedrückt und damit gespannt. Die Druckfeder 24 ist eine harte Feder, die Druckfeder 28 dagegen ist eine weiche Feder, das heißt die Federhärte der Druckfeder 24 ist so gewählt, daß sie ohne merkliche Zusammendrückung die Aufwärtsbewegung der Betätigungsspindel 12 auf die Anzeigespindel 14 überträgt und darüber hinaus noch die weiche Druckfeder 28 spannt.
Das Kopfstück 18 der Anzeigespindel 14 bewegt sich bei dieser Aufwärtsbewegung relativ zum ortsfesten Führungsstück 22, wobei die Rippen 34,35 und der Stift 56 des Kopfstückes durch die entsprechenden Schlitze 36 bzw. die Bohrung 58 des Führungsstückes 22 hindurchlaufen und aus dem Führungsstück an dessen Oberseite hinaustreten;aus der Höhe bzw. aus dem Maß, um das die Rippen 34 über das Führungsstück 18 überstehen, kann der Hub der Betätigungsspindel 12 und damit des Ventilelementes abgelesen bzw. abgeschätzt werden.
Infolge der gewölbten Form von Kopfstück und Führungsstück treten sämtliche Rippen des Kopfstückes gleichzeitig aus den Schlitzen 36 des Führungsstückes 22 heraus aber in der Höhe abgestuft, so daß sich eine deutlich sichtbare visuelle Anzeige ergibt, die noch dadurch verstärkt werden kann, daß Kopfstück und Führungsstück in unterschiedlicher Farbe, beispielsweise das Kopfstück rot und das Führungsstück schwarz ausgelegt sind.
Der Hub des Kopfstückes ist vorgegeben z.B. auf 5 mm und er wird begrenzt durch Anschlag des Kopfstückes 18 am Führungsstück 22.
Bis zum Erreichen des maximalen Hubes des Kopfstückes bzw. der Anzeigespindel 14 wird die Feder 24 nicht merklich zusammengedrückt. Schlägt nun das Kopfstück 18 am ortsfesten Führungsstück 22 an und ist der Hub der Betätigungsspindel 12 größer als der Hub der Anzeigespindel 14, so bewegt sich die Betätigungsspindel 12 weiter nach oben relativ zur Anzeigespindel 14 und taucht weiter in diese ein, wobei die Feder 24 zusammengedrückt wird (die Feder 28 wird nicht weiter zusammengedrückt, da sich die Anzeigespindel 14 nicht mehr weiter nach oben bewegen kann).
Die Aufwärtsbewegung der Betätigungsspindel 12 und damit die Zusammendrückung der Feder 24 wird jedoch begrenzt durch die an der Betätigungsspindel 12 ausgebildeten Noppen 32, welche in die Langlöcher 30 der Anzeigespindel 14 eingreifen. Durch Anschlag dieser Noppen 32 am oberen Ende der Langlöcher 30 wird der Hub der Betätigungsspindel 12 und damit der Hub des Ventilelementes begrenzt, insbesondere um die Feder 24 nicht so weit zusammenzudrücken, daß Windung an Windung liegt.
Schließt nun das Ventil wieder, so bewegt sich die Betätigungsspindel 12 abwärts. Solange die Feder 24 aber noch gespannt ist, bleibt die Anzeigespindel 14 und damit das Kopfstück 18 in der oberen Endstellung, das heißt, das Kopfstück 18 wird weiterhin durch die Feder 24 gegen das Führungsstück 22 angedrückt.
Im Laufe der Abwärtsbewegung der Betätigungsspindel 12 (das heißt beim Schließvorgang des Ventiles) wird die Feder 24 entspannt und schließlich locker, das heißt der Abstand zwischen der oberen Stirnfläche der Betätigungsspindel 12 und der unteren Stirnfläche des Steges 54 wird größer als die axiale Länge der Feder 24 im unbelasteten Zustand.
Sobald die Druckfeder 24 nicht mehr unter Spannung steht und die Abwärtsbewegung der Betätigungsspindel 12 sich fortsetzt, wird die Anzeigespindel 14 durch die Rückholfeder 28 nachgeführt und nach unten in ihre in Fig. 1 gezeigte Ausgangsstellung gebracht, in der das Kopfstück 18 an der Schulter 52 der Gewindebüchse 16 anliegt.
(Die Maße von Kopfstück 18 und Führungsstück 22 sind so gewählt, daß in der in Figur 1 gezeigten Null-Stellung oder unteren Endstellung das Kopfstück 18 nur knapp innerhalb des Führungsstückes 22 liegt, in Figur 1 ist der Unterschied zwischen Führungsstück und Kopfstück aus Gründen der Übersichtlichkeit vergrößert dargestellt).
Infolge der großen sichtbaren Fläche der aus den Schlitzen des Führungsstückes 22 hinaustretenden Rippen 34 des Kopfstückes 18 können auch kleine Hübe des Ventiles erkannt und zuverlässig abgeschätzt werden.
Wegen der nicht-starren Verbindung zwischen Betätigungsspindel 12 und Anzeigespindel 14 kann die Stellungsanzeigevorrichtung 10 auch für Ventile verwendet werden, deren Öffnungshub größer ist als der maximale Hub der Anzeigespindel 14. Die Stellungsanzeigevorrichtung 10 kann daher für eine breite Palette von Ventilen bzw. Ventilbaureihen eingesetzt werden.

Nach einer anderen in der Zeichnung nicht dargestellten Ausführungsform sind die Betätigungsspindel 12 und die Anzeigespindel 14 nur durch Reibungsschluß miteinander verbunden. Bei dieser Ausführungsform fallen die Feder 24, die Feder 28, die Langlöcher 30, die Noppen 32 und der Steg 54 weg.
Bei der Aufwärtsbewegung der Betätigungsspindel 12 wird durch Reibungsschluß zwischen der Außenfläche der Spindel 12 und der Innenfläche der Anzeigespindel 14 die Letztere mitgenommen, wobei die Anzeige in derselben Weise wie oben beschrieben erfolgt und ebenso der maximale Hub der Anzeigespindel 14 durch Anschlag des Kopfstückes 18 am Führungsstück 22 begrenzt ist. Ist der Hub der Betätigungsspindel 12 größer als der maximale Hub der Anzeigespindel 14, so taucht die Betätigungsspindel 12 eben weiter in die Anzeigespindel 14 ein, die ihrerseits sich nicht weiter bewegt, da ihr Kopfstück 18 bereits am Führungsstück 22 zum Anschlag gelangt ist.
Wird das Ventil geschlossen, so bewegt sich die Betätigungsspindel 12 nach unten und nimmt durch Reibungsschluß die Anzeigespindel 14 mit bis deren Kopfstück 18 an der Schulter 52 der Gewindebüchse 16 anschlägt.

Auch diese Ausführungsform kann somit zur Stellungsanzeige von Ventilen verwendet werden, deren Öffnungshub größer ist als der maximale Hub der Anzeigespindel 14.

## Patentansprüche

1. Vorrichtung zur Stellungsanzeige eines Ventils, insbesondere für kleine Hübe, mit einer Betätigungsspindel (12), die fest mit einem Ventilelement verbunden ist, wobei die Vorrichtung fest m Gehäuse des Ventils angebracht und die Betätigungspindel (12) mit einer Anzeigespindel (14) gekoppelt ist, die durch das Gehäuse (48, 50) des Ventils (46) nach außen durchgeführt ist und durch welche die jeweilige Stellung des Ventils anzeigbar ist, **dadurch gekennzeichnet,** daß die Betätigungsspindel (12) und die Anzeigespindel (14) in Axialrichtung relativ zueinander verschiebbar gekeppelt sind.

2. Vorrichtung nach Anspruch 1, dadurch gekennzeichnet, daß der vorgegebene maximale Hub der Anzeigespindel (14) durch einen Anschlag begrenzt ist und daß, wenn der Hub der Betätigungsspindel (12) größer ist als der maximale Hub der Anzeigespindel (14), die Betätigungsspindel (12) axial relativ zur Anzeigespindel (14) verschiebbar ist.

3. Vorrichtung nach einem der vorhergehenden Ansprüche, dadurch gekennzeichnet, daß die Anzeigespindel (14) rohrförmig ausgebildet ist und die Betätigungsspindel (12) in die Anzeigespindel (14) eingeführt ist.

4. Vorrichtung nach Anspruch 1 oder 2, dadurch gekennzeichnet, daß die Betätigungsspindel (12) mit der Anzeigespindel (14) mittels einer Reibverbindung gekoppelt ist.

5. Vorrichtung nach Anspruch 4, dadurch gekennzeichnet, daß die Reibverbindung durch Reibungsschluß zwischen der Außenfläche der Betätigungsspindel (12) und der Innenfläche der Anzeigespindel (14) gebildet ist.

6. Vorrichtung nach Anspruch 1 oder 2, dadurch gekennzeichnet, daß axial zwischen der Betätigungsspindel (12) und der Anzeigespindel (14) eine Druckfeder (24) eingebaut ist, über welche die Anzeigespindel (14) durch die Betätigungsspindel (12) in Axialrichtung beaufschlagbar ist.

7. Vorrichtung nach einem der vorhergehenden Ansprüche, dadurch gekennzeichnet, daß die Anzeigespindel (14) in einer in das Ventilgehäuse (50) eingeschraubte Gewindebüchse (16) geführt ist.

8. Vorrichtung nach Anspruch 7, dadurch gekennzeichnet, daß zur Rückführung der Anzeigespindel (14) zwischen dieser und der Gewindebüchse (16) eine Druckfeder (28) angeordnet ist.

9. Vorrichtung nach Anspruch 6, dadurch gekennzeichnet, daß die Anzeigespindel (14) mit wenigstens einem axialen Langloch (30) versehen ist, in das wenigstens ein Noppen (32) der Betätigungsspindel (12) eingreift zur Begrenzung des maximalen axialen Überlaufs der Betätigungsspindel (12) relativ zur Anzeigespindel (14).

10. Vorrichtung nach einem der vorhergehenden Ansprüche, dadurch gekennzeichnet, daß die Anzeigespindel (14) an ihrem äußeren Ende mit einem Kopfstück (18) versehen ist, das relativ zu einem ventilgehäusefesten Führungsstück (22) axial verschiebbar ist.

11. Vorrichtung nach Anspruch 10, dadurch gekennzeichnet, daß das Kopfstück (18) mit z.B. kreissegmentförmigen Rippen (34, 35, 56) versehen ist, die durch entsprechende kreissegmentförmige Schlitze (36, 58) des Führungsstückes (22) hindurchgreifen und deren Position relativ zum Führungsstück (22) die Stellung des Ventils anzeigt.

12. Vorrichtung nach Anspruch 11, dadurch gekennzeichnet, daß die Rippen (34, 35) des Kopfstückes (18) und die Schlitze (36) des Führungsstückes (22) längs mehrerer konzentrischer Kreise mit unterschiedlichen Radien angeordnet sind.

13. Vorrichtung nach einem der Ansprüche 10 - 12, dadurch gekennzeichnet, daß die Außenform des Kopfstückes (18) und die Außenform des Führungsstückes (22) im Längsschnitt etwa haubenförmig ausgebildet ist.

14. Vorrichtung nach einem der Ansprüche 10 - 13, dadurch gekennzeichnet, daß das Kopfstück (18) und das Führungsstück (22) durch einen Deckel (20) aus durchsichtigem Material nach außen abgedeckt sind.

## Claims

1. A device for indicating the position of a valve, particularly for shorter valve travel distances, with an actuating spindle (12) which is rigidly connected to a valve element, the device being mounted rigidly on the housing of the valve and the actuating spindle (12) being coupled to an indicating spindle (14) which is passed outwardly through the housing (48, 50) of the valve (46) and by which it is possible to indicate the position of the valve at any given time, characterised in that the actuating spindle (12) and the indicating spindle (14) are in an axial direction coupled for relative displacement in respect of each other.

2. A device according to Claim 1, characterised in that the predetermined maximum travel of the indicating spindle (14) is defined by an abutment and in that if the travel of the actuating spindle (12) is greater than the maximum travel of the indicating spindle (14), the actuating spindle (12) is adapted for axial displacement in relation to the indicating spindle (14).

3. A device according to one of the preceding Claims, characterised in that the indicating spindle (14) is of tubular construction and the actuating spindle (12) is inserted into the indicating spindle (14).

4. A device according to Claim 1 or 2, characterised in that the actuating spindle (12) is frictionally coupled to the indicating spindle (14).

5. A device according to Claim 4, characterised in that the frictional connection is constituted by frictional engagement between the outer surface of the actuating spindle (12) and the inner surface of the indicating spindle (14).

6. A device according to Claim 1 or 2, characterised in that axially between the actuating spindle (12) and the indicating spindle (14) there is fitted a thrust spring (24) by which the actuating spindle (12) can act in an axial direction on the indicating spindle (14).

7. A device according to one of the preceding Claims, characterised in that the indicating spindle (14) is guided in a screw-threaded bush (16) which is screwed into the valve housing (50).

8. A device according to Claim 7, characterised in that to reset the indicating spindle (14), a thrust spring (28) is disposed between it and the screw-threaded bush (16).

9. A device according to Claim 6, characterised in that the indicating spindle (14) comprises at least one axial elongated hole (30) engaged by at least one stud (32) on the actuating spindle (12) to limit the maximum axial overlap of the actuating spindle (12) in relation to the indicating spindle (14).

10. A device according to one of the preceding Claims, characterised in that the indicating spindle (14) has at its outer end a head piece (18) which is adapted for axial displacement in relation to a guide member (22) rigid with the valve housing.

11. A device according to Claim 10, characterised in that the head piece (18) has ribs (34, 35, 56) for example in the form of segments of a circle and which engage through corresponding segmentally shaped slots (36, 58) in the guide piece (22) and the position of which in relation to the guide piece (22) indicates the position of the valve.

12. A device according to Claim 11, characterised in that the ribs (34, 35) of the head piece (18) and the slots (36) in the guide piece (22) are disposed longitudinally of a plurality of concentric circles of different radii.

13. A device according to one of Claims 10 to 12, characterised in that the outward form of the head piece (18) and the outward form of the guide piece (22) are substantially hood-shaped in longitudinal section.

14. A device according to one of Claims 10 to 13, characterised in that the head piece (18) and the guide piece (22) are outwardly masked by a cover (20) of transparent material.

## Revendications

1. Dispositif indiquant la position d'une soupape, en particulier pour de petites courses, comportant une tige de commande (12) qui est reliée de manière fixe avec une pièce de soupape, le dispositif étant fixé sur le carter de la soupape et la tige de commande (12) étant couplée à une tige de signalisation (14) qui passe à l'extérieur à travers le carter (48, 50) de la soupape (46) et par laquelle peut être indiquée la position relative de la soupape, caractérisé en ce que la tige de commande (12) et la tige de signalisation (14) sont, dans la direction axiale, reliées l'une à l'autre d'une manière réglable.

2. Dispositif suivant la revendication 1, caractérisé en ce que la course maximale préréglée de la tige de signalisation (14) est limitée par une butée et en ce que, quand la course de la tige de commande (12) est supérieure à la course maximale de la tige de signalisation (14), la tige de commande (12) est déplaçable axialement par rapport à la tige de signalisation (14).

3. Dispositif suivant l'une des revendications précédentes, caractérisé en ce que la tige de signalisation (14) est prévue en forme de tube et la tige de commande (12) est introduite dans la tige de signalisation (14).

4. Dispositif suivant la revendication 1 ou 2, caractérisé en ce que la tige de commande (12) est couplée à la tige de signalisation (14) au moyen d'une liaison à friction.

5. Dispositif suivant la revendication 4, caractérisé en ce que la liaison à friction est formée par fermeture à friction entre la surface externe de la tige de commande (12) et la surface interne de la tige de signalisation (14).

6. Dispositif suivant la revendication 1 ou 2, caractérisé en ce que, entre la tige de commande (12) et la tige de signalisation (14), est axialement installé un ressort à pression (24) par lequel la tige de signalisation (14) peut être actionnée axialement par la tige de commande (12).

7. Dispositif suivant l'une des revendications précédentes, caractérisé en ce que la tige de signalisation (14) passe dans un manchon fileté (16) vissé dans le carter de soupape 50.

8. Dispositif suivant la revendication 7, caractérisé en ce que, pour le rappel de la tige de signalisation (14), est disposé, entre celle-ci et le manchon fileté (16), un ressort comprimé (28).

9. Dispositif suivant la revendication 6, caractérisé en ce que la tige de signalisation (14) présente au moins une lumière longitudinale (30) dans laquelle entre au moins un ergot (32) de la tige de commande (12) pour la limitation du dépassement axial maximal de la tige de commande (12) par rapport à la tige de signalisation (14).

10. Dispositif suivant l'une des revendications précédentes, caractérisé en ce que la tige de signalisation (14) est pourvue, à son extrémité externe, d'une tête (18) qui est mobile axialement par rapport à une pièce de guidage (22) montée dans le carter de soupape.

11. Dispositif suivant la revendication 10, caractérisé en ce que la tête (18) présente, par exemple, des nervures en forme de segments de cercle (34, 35, 56) qui pénètrent dans des fentes correspondantes en forme de segments de cercle (36, 58) de la pièce de guidage (22) et dont la position par rapport à la pièce de guidage (22) indique la position de la soupape.

12. Dispositif suivant la revendication 11, caractérisé en ce que les nervures (34, 35) de la tête (18) et les fentes (36) de la pièce de guidage (22) sont disposées le long de plusieurs cercles concentriques de rayons différents.

13. Dispositif suivant l'une des revendications 10 à 12, caractérisé en ce que la forme extérieure de la tête (18) et la forme extérieure de la pièce de guidage (22) sont prévues, en coupe longitudinale, à peu près en forme de coupole.

14. Dispositif suivant l'une des revendications 10 à 13, caractérisé en ce que la tête (18) et la pièce de guidage (22) sont recouvertes, vers l'extérieur, par un couvercle (20) en matière transparente.
